# EUROPEAN PATENT SPECIFICATION

(11) **EP 2 090 824 B1**
(45) Date of publication and mention of the grant of the patent: **28.09.2016**
(21) Application number: 09152454.6
(22) Date of filing: 10.02.2009
(51) Int. Cl.: A01G 9/26, F21V 14/02, F21V 19/02, F21V 21/15

(54) **Greenhouse light, greenhouse light system and method for altering the radiation pattern of a greenhouse light**
Gewächshauslicht, Gewächshauslichtsystem und Verfahren zum Ändern des Strahlenmusters eines Gewächshauslichts
Lampe de serre, système d'éclairage de serre et procédé pour modifier le motif de rayonnement d'une lampe de serre

(30) Priority: 12.02.2008 FI 20080099
(43) Date of publication of application: 19.08.2009
(73) Proprietor: Puutarhaliike Helle Oy, 21410 Vanhalinna (FI)
(72) Inventor: Helle, Timo, 20660 Littoinen (FI)
(74) Representative: Turun Patenttitoimisto Oy

(56) References cited:
- WO-A1-2006/046858
- AT-B- 341 617
- SU-A1- 1 018 592
- US-A- 3 931 695
- US-A- 4 146 993
- US-A- 5 095 414
- US-B1- 6 312 139

## Description

### TECHNICAL FIELD OF THE INVENTION

The invention relates to a greenhouse light according to the preamble of the independent claim presented below.

### BACKGROUND OF THE INVENTION

Several different factors, which influence the growth rate and productivity, must be taken into account when cultivating plants such as vegetables and fruits. Among others the cultivation temperature, the humidity of the air and soil and the amount of light have a substantial influence on the productivity of a plant.

In greenhouse cultivation the above-mentioned factors, which have an influence on the productivity, may be adjusted in a controlled manner. The temperature of the greenhouse and the humidity of the air and soil are selected according to the cultivated plant species. In order to achieve a sufficient amount of light during all times of the year and day, lighting is used in the greenhouse, the luminosity of which lighting can be adjusted. In addition the lights typically use light sources, the spectre of which is such that the light produced by the light sources promotes the photosynthesis of the plants.

Greenhouse lighting has traditionally been carried out using overhead lights, which are attached to the ceiling of the greenhouse and which radiate downwards, in which lights a stationary reflector, which is integrated into the light frame, has been used in order to achieve the desired light beam. Publication US 6312139 presents an overhead light system, where the lights are moveable in the vertical direction. With the presented solution the lights can be brought close to the growth, regardless of the height of the growth. Thus for example in the growing stage of the plant, the overhead lights can be moved so that they are always at a desired distance from the top part of the growth. Publication US 5095414 on the other hand presents a greenhouse light, where the reflector of the light can be turned around the longitudinal axis of the bulb and thus the light beam of the
light can be directed in different directions. Further greenhouse lights are known from publications WO 2006/046858 A1 and SU 1018592 A.

The problem with the overhead light is that with them sufficient light can be produced only to the top part of the growth. If the luminosity of the overhead light were to be increased so much that it would suffice also for the lower parts of the growth, there would be a danger that the temperature would rise too high in the top parts of the growth. The temperature rise could thus result in damage in the plant. Additionally the problem with the overhead lights is that they function as shades for natural light and thus shade the growth.

So-called intermediate lights can also be used in greenhouses in addition to or instead of overhead lights, which intermediate lights are placed lower between the rows of the growth. The intermediate light typically has no reflector at all and the elongated light source is arranged in a vertical position, whereby the light radiates omnidirectionally. The task of the intermediate light is to give light especially to the middle and lower parts of the growth. The use of an intermediate light is necessary for example when cultivating cucumbers, tomatoes or peppers, since the top part of the growth in these cases heavily shades the lower parts of the growth.

As different plants are typically cultivated in a greenhouse, the light need of which varies, greenhouses have to be equipped with both overhead and intermediate lights. Overhead and intermediate lights can be used either separately or simultaneously. Both the growth stage of the plant and the natural light conditions have an impact on the need for using lights. The problem with known greenhouse lights is that they are suitable only for one purpose. In other words, an overhead light cannot, due to its narrow light beam, be used as an intermediate light, and on the other hand an intermediate light is not suitable for use as an overhead light. Therefore the equipment costs for greenhouse lighting typically become high.

### OBJECTS OF THE INVENTION

It is an object of the present invention to reduce or even completely eliminate the above-mentioned problems and flaws, which appear in the prior art.

It is an object of the present invention to provide a greenhouse light, which is suited for use as an overhead light and as an intermediate light. It is also an object of the invention to provide a greenhouse light, the manufacturing costs of which are small, and which is structurally simple. It is further an object of the invention to provide a greenhouse light, the purpose of use of which is easy and quick to alter. It is also an object to provide a greenhouse light system, which can be used both as an overhead light system for lighting the top parts of the growth and as an intermediate light system for lighting the middle and lower parts of the growth. It is further an object to provide a method, whereby the radiation pattern of the greenhouse light easily and quickly can be altered between a narrow and a wide radiation pattern.

The above-mentioned disadvantages can be reduced or even completely eliminated, and above-mentioned objects are attained with the present invention, which is characterised in what is defined in the characterising part of the independent claim presented further below. Some preferred embodiments according to the invention are disclosed in the dependent claims presented further below.

### DESCRIPTION OF THE INVENTION

A typical greenhouse light according to the invention comprises a light frame, a light source fitted in connection with the first end of the light frame and a reflector arranged at a distance from the light source for reflecting the electromagnetic radiation emitted by the light source. For a typical greenhouse light according to the invention it is characteristic that the light frame is arranged to be turnable in relation to the reflector, so that the distance between the light source and the reflector can be adjusted, and that the greenhouse light comprises a support member, whereto the reflector is attached and in connection with which support member the second end of the light frame is arranged.

In other words a typical greenhouse light according to the invention has the characteristic that by turning the light frame the light source can be arranged close to the reflector and away from it.

The light frame of the greenhouse light according to the invention can be manufactured for example from a rifled aluminium profile in order to provide sufficient cooling. The light frame can also be manufactured for example from steel plate.

The light source is typically attached to the lamp holder arranged in connection with the first end of the light frame. The shape of the light source is preferably elongated and it is fitted so that the longitudinal direction of the light is essentially parallel to the longitudinal direction of the light frame.

The electric connection device of the greenhouse light can be installed inside the light frame. It is also possible that the electric connection device is encased as a separate unit, whereby the light frame can be made lighter and thus easier to turn. Inlets, which have a sufficient protection classification, for example IP23, must be arranged for the connection wires of the light.

An advantage of a typical greenhouse light according to the invention is that the light is multifunctional due to the turnability of the light frame. The light can be used both as an overhead light and an intermediate light of a greenhouse. In the first use position, i.e. the so-called overhead light position, the light frame is turned so that the light source is close to the reflector. Thus the light can be used to light the top part of the growth. When used in the overhead light position the light distribution of the greenhouse light according to the invention can be influenced by selecting a reflector, which is suitable for the purpose of use. The reflector can for example be a paraboloidal reflector or it can comprise reflecting plane surfaces, which are situated so in relation to each other that a desired radiation pattern is achieved.

In the second use position of the greenhouse light, i.e. the so-called intermediate light position, the light frame is turned so that the light source is substantially away from the reflector. The light frame is thus preferably turned so that the light frame is in a horizontal position, whereby the light is suitable for use to light the middle and lower parts of the growth.

The reflector is typically attached to the support member in a non-moveable manner. Preferably the reflector and light frame are arranged in connection with the support member so that the light source is situated essentially to its entire length below the reflector, when in the so-called overhead light position. The support member can for example be a rail, trough or cable wire. The dimensions of the support member are selected separately in each case.

In an advantageous embodiment of the greenhouse light according to the invention the second end of the light frame is pivoted to the support member. Instead of the second end of the light frame being pivoted directly to the support member, the light frame can be arranged in connection with the support member also through some holding member, such as a bar or a cable wire.

Pivoting the light frame directly to the support member is a simple and strong solution. By arranging the light frame in connection with the support member through some holding member the light source can in the intermediate light position be lowered to a desired distance from the support member by dimensioning the holding member to a suitable length.

According to an embodiment of the invention the light frame can be turned in the direction of the optical axis of the reflector. By the optical axis of the reflecting optical element, such as the reflector, is meant the direction, which is congruent with the symmetric axis of the reflective surface.

According to an embodiment of the invention the turning angle of the light frame is at least 60 degrees, preferably at least 75 degrees and especially preferably at least 90 degrees. By turning angle is in this context meant the angle between the extreme positions of the light frame.

The greenhouse light according to an embodiment of the invention comprises turning means for turning the light frame between the first use position and the second use position.

According to an advantageous embodiment of the invention the turning means comprise a cable wire, the first end of which is arranged in connection with the light frame, and an actuator for moving said cable wire. Typically the cable wire has been arranged to travel, with the aid of one or more guides, such as for example guiding rolls, at least a part of the way essentially in the longitudinal direction of the support member. The first end of the cable wire is preferably attached to the part above the light frame so that the light frame turns when the cable wire is moved. In the second end of the cable wire can be arranged for example an electric motor, by using which the position of the light frame is altered. In some cases the cable wire can also have many parts. The turning means can also be operated manually.

According to an embodiment of the invention the light source is a high pressure sodium lamp, a multimetal lamp or a mercury vapour lamp. For example an energy saving lamp can also be used as the light source. Several light sources, such as for example power LED's, can also be arranged into the light frame in order to achieve sufficient luminosity.

According to an embodiment of the invention the power of the light source can be adjusted between 100 and 700 W, preferably between 200 and 600 W and especially preferably between 250 and 450 W. The power of the light source can be adjusted for example with the aid of a relay or a stepless control device arranged in the light. The luminosity of the light can thus be adjusted to be suitable in different use positions. In the overhead light position the power of the light source is for example between 400 and 600 W and in the intermediate light position between 200 and 400 W.

The greenhouse light according to an embodiment of the invention further comprises transfer means for moving the support member in an essentially vertical direction. As transfer means can be used for example cable wires, which are attached to the support member and wherewith the greenhouse light can be moved to a desired height. In the overhead light position the light is lowered close to the top part of the growth or lifted up to the ceiling of the greenhouse. In the intermediate light position the light is typically lowered in between the rows of growth in order to light the middle and lower part of the growth.

There is provided a greenhouse light system, which comprises a support member, and at least two greenhouse lights arranged in connection with the support member, which greenhouse light comprises a light frame, a light source fitted in connection with the first end of the light frame and a reflector arranged at a distance from the light source for reflecting the electromagnetic radiation emitted by the light source. For a typical greenhouse light system the light frame is arranged to be turnable in relation to the reflector, so that the distance between the light source and the reflector can be adjusted.

The greenhouse lights are arranged in connection to the support member in a substantially straight line. The shape of the support member is typically elongated. The at least two greenhouse lights arranged in connection with the support member can be turned simultaneously or independently of each other.

An advantage of a typical greenhouse light system is that it can be used both as an overhead light and as an intermediate light. Thus the greenhouse does not need to be equipped with separate overhead and intermediate light systems.

There is provided a method for altering the radiation pattern of a greenhouse light, which greenhouse light comprises a light frame, a light source fitted in connection with the first end of the light frame and a reflector arranged at a distance from the light source for reflecting the electromagnetic radiation emitted by the light source. In a typical method the distance between the reflector and the light source is altered by turning the light frame in relation to the second end of the light frame.

It is an advantage of a typical method that the radiation pattern of the greenhouse light can easily and quickly be altered between a narrow and a wide radiation pattern.

The embodiments and advantages mentioned in this text relate, where applicable, to all of the greenhouse light, greenhouse light system and the method according to the invention, even if this is not always specifically mentioned.

### BRIEF DESCRIPTION OF THE DRAWING

In the following the invention will be described in more detail with reference to the embodiments presented as examples and the enclosed figures, in which
- Fig. 1: shows a greenhouse light according to an embodiment of the invention in a first use position, where the light source is arranged close to the reflector,
- Fig. 2: shows a greenhouse light according to an embodiment of the invention in a second use position, where the light source is arranged away from the vicinity of the reflector,
- Fig. 3: shows a greenhouse light system in a first use position, where the light sources are arranged close to the reflectors,
- Fig. 4: shows a greenhouse light system in a second use position, where the light sources are arranged away from the vicinity of the reflectors, and
- Fig. 5: shows a greenhouse light according to a second embodiment of the invention.

### DETAILED DESCRIPTION OF THE DRAWING

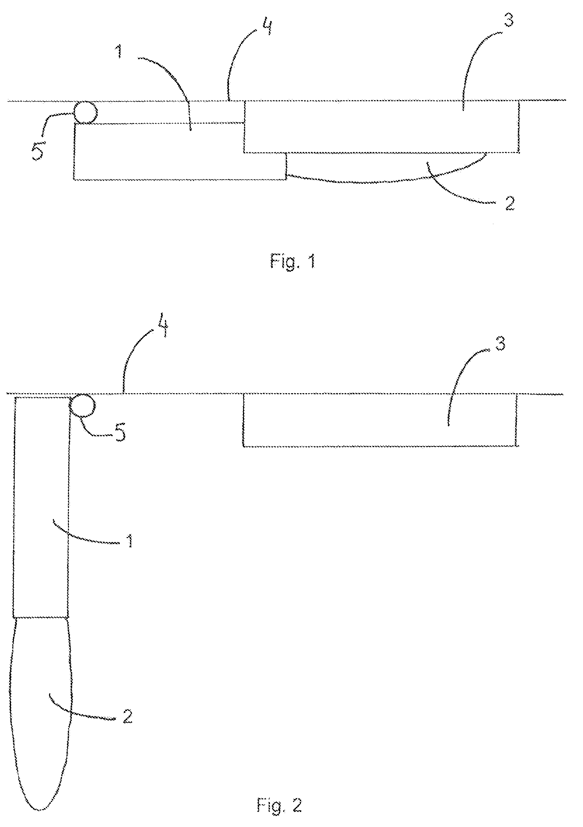

In figure 1 is shown a greenhouse light according to an embodiment of the invention, which greenhouse light comprises a light frame 1, in connection with which a light source 2 has been fitted, and a reflector 3 arranged at a distance from the light source. The dimensions and shape of the light frame 1 can be determined according to the electric components to be placed in the light frame 1 and the solutions, which suit the use of the light. The light source 2 can for example be a high pressure sodium lamp, a multimetal lamp or a mercury vapour lamp. The power of the light source 2 can be adjustable for example between 200 and 400 W. The shape of the reflector 3 can for example be a paraboloid. In figure 1 is further shown a support member 4, whereto the reflector 3 is attached. The support member 4 can be for example a rail, in connection with which electric or communication connections or actuators meant for moving the light frame 1 can be arranged. In figure 1 the light frame 1 is arranged in connection with the support member 4 with the aid of a joint 5, but the connection could for example be realised also with cable wires.

In figure 1 the position of the light frame 1 is such that the light source 2 is in the immediate vicinity of the reflector 3. Thus the reflector 3 reflects the electromagnetic radiation emitted by the light source 2 in the space, where the greenhouse light is situated. The greenhouse light can thus function as a so-called overhead light, the purpose of which is to light the growth from above during times, when natural light is scant.

In figure 2 is shown a greenhouse light, where the light frame 1 has been turned so that the light source 2 departs from the vicinity of the reflector 3. In this example the turning angle is 90 degrees.

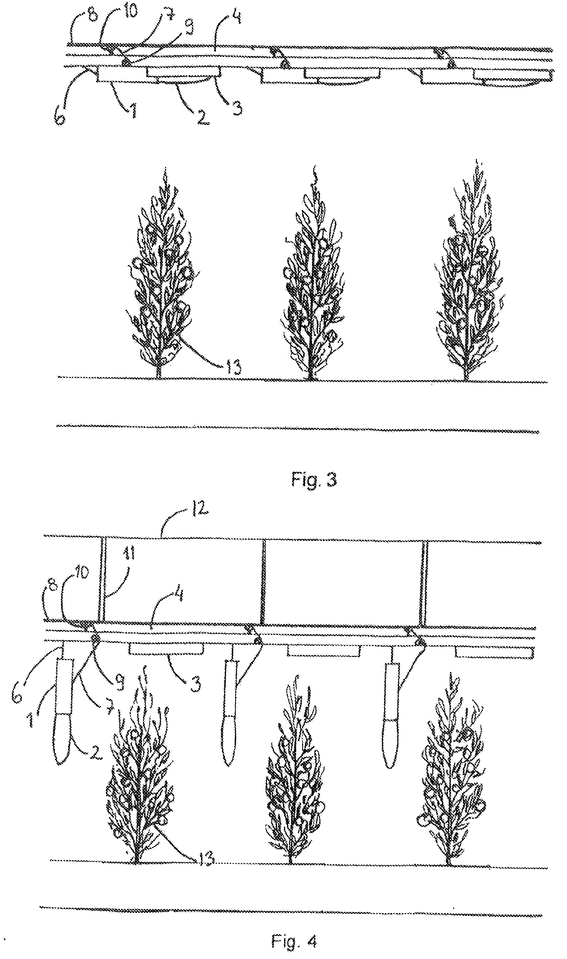

In figure 3 is shown a greenhouse light system, where several light frames 1 have been attached to the support member 4 with the aid of cable wires. In the example of figure 3, the first cable wire 6 is attached to the base of the light frame 1 and the second cable wire 7 is attached to the side above the light frame 1. The cable wire 7 is in connection with the third cable wire 8, which runs in the support member 4. In the example of figure 3 guiding rolls 9 and 10 have further been arranged in connection with the support member 4 for guiding the travel of the cable wire 7. The turning of the light frame 1 can be realised by guiding the cable wire 8 for example with some kind of actuator situated in the support member 4. When the cable wire 8 is pulled, the cable wires 7 attached to the light frames 1 are also pulled at the same time. This way the light frames 1 can be brought close to the support member 4, while at the same time bringing the light sources 2 close to the reflectors 3.

In figure 4 is shown a greenhouse light system, where several light frames 1 have been attached to the support member 4 with the aid of cable wires. When the cable wire 8 is loosened, the cable wires 7 attached to the light frames 1 respectively move guided by the guiding rolls 9 and 10 and the light frames 1 turn away from the reflectors 3. In the example of figure 4 the light frames 1 have been turned 90 degrees. In figure 4 is also shown an example of the transfer means of the support member 4 and the moving of the support member 4 in the vertical direction. The support member 4, for example a rail, is attached with the aid of cable wires 11 to some support structure 12, which stays in its place. The support member 4 can be lowered closer to the plants 13 by guiding the cable wires 11 for example with some device situated in the support structure 12. When the light frame 1 is turned away from the vicinity of the reflector 3 and the light sources have been brought closer to the plants 13, the greenhouse light can function as a so-called intermediate light. The intermediate light is situated between the rows of growth and makes light obtaining possible for such growth parts that are left in shadow when using light that comes from above.

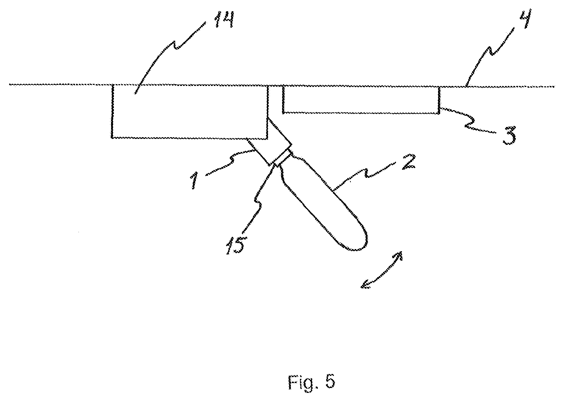

Figure 5 shows a greenhouse light according to a second embodiment of the invention. The electric connection device 14 of the light is encased as a separate unit. An advantage of the electric connection device 14 arranged outside the light frame is that the light frame 1 can be made light and thus easy to turn. The encased electric connection device 14 is attached to the support member 4. The second end of the light frame 1 has, in turn, been arranged in connection with the encased electric connection device 14 so that the light frame 1 can be turned in the directions shown by the two-ended arrow portrayed in the figure. In the situation shown in figure 5 the light has been turned 45 degrees from its first use position.

In connection with the first end of the light frame 1 has been arranged a light source 2, which is fitted into the lamp holder 15 in the light frame 1. Connecting wires (not shown) have been installed in the light in order to provide the electric connection between the electric connection device 14 and the lamp holder 15. The inlets of the connection wires have been made waterproof. The light further comprises a reflector 3, which is attached to the support member 4.

It is obvious to someone skilled in the art that the invention is not limited merely to the above-described examples but the invention may vary within the scope of the claims presented below. The dependent claims present some possible embodiments of the invention, and they are not to be considered to restrict the scope of protection of the invention as such.

## Claims

1. Greenhouse light, comprising:
- a light frame (1),
- a light source (2) fitted in connection with a first end of the light frame (1) and
- a reflector (3) arranged at a distance from the light source (2) for reflecting the electromagnetic radiation emitted by the light source (2);
wherein the light frame (1) is arranged to be turnable in relation to the reflector (3), so that the distance between the light source (2) and the reflector (3) can be adjusted,
**characterized in that** the greenhouse light comprises a support member (4), whereto the reflector (3) is attached and in connection with which support member (4) a second end of the light frame (1) is arranged.

2. Greenhouse light according to claim 1, **characterized in that** the second end of the light frame (1) is pivoted to the support member (4).

3. Greenhouse light according to claim 1 or 2, **characterized in that** the support member (4) is a rail, trough or cable wire.

4. Greenhouse light according to any of the preceding claims, **characterized in that** the light frame (1) can be turned in the direction of the optical axis of the reflector (3).

5. Greenhouse light according to any of the preceding claims, **characterized in that** the turning angle of the light frame (1) is at least 60 degrees.

6. Greenhouse light according to any of the preceding claims, **characterized in that** it comprises turning means for turning the light frame (1) between a first use position and a second use position.

7. Greenhouse light according to claim 6, **characterized in that** the turning means comprise a cable wire (7), a first end of which is arranged in connection with the light frame (1), and an actuator for moving said cable wire (7).

8. Greenhouse light according to any of the preceding claims, **characterized in that** the light source (2) is a high pressure sodium lamp, a multimetal lamp or a mercury vapour lamp.

9. Greenhouse light according to any of the preceding claims, **characterized in that** the power of the light source (2) can be adjusted between 100 and 700 W.

10. Greenhouse light according to any of the preceding claims, **characterized in that** it comprises transfer means for moving the support member (4) in an essentially vertical direction.

## Patentansprüche

1. Gewächshaus-Lampe umfassend
- einen Lampenrahmen (1),
- eine Lichtquelle (2), welche in Verbindung mit einem ersten Ende des Lampenrahmens (1) angebracht ist, und
- einen Reflektor (3), welcher in einem Abstand von der Lichtquelle (2) angeordnet ist, um die elektromagnetische Strahlung, welche durch die Lichtquelle (2) emittiert wird, zu reflektieren;
wobei der Lampenrahmen (1) ausgestaltet ist, um relativ zu dem Reflektor (3) drehbar zu sein, so dass der Abstand zwischen der Lichtquelle (2) und dem Reflektor (3) eingestellt werden kann,
**dadurch gekennzeichnet,**
**dass** die Gewächshaus-Lampe ein Stützteil (4) umfasst, an welchem der Reflektor (3) angebracht ist, und wobei in Verbindung mit dem Stützteil (4) ein zweites Ende des Lampenrahmens (1) angeordnet ist.

2. Gewächshaus-Lampe nach Anspruch 1, **dadurch gekennzeichnet, dass** das zweite Ende des Lampenrahmens (1) zu dem Stützteil (4) geschwenkt ist.

3. Gewächshaus-Lampe nach Anspruch 1 oder 2, **dadurch gekennzeichnet, dass** das Stützteil (4) eine Schiene, eine Wanne oder ein Kabelzug ist.

4. Gewächshaus-Lampe nach einem der vorhergehenden Ansprüche, **dadurch gekennzeichnet, dass** der Lampenrahmen (1) in die Richtung der optischen Achse des Reflektors (3) gedreht werden kann.

5. Gewächshaus-Lampe nach einem der vorhergehenden Ansprüche, **dadurch gekennzeichnet, dass** der Drehwinkel des Lampenrahmens (1) mindestens 60 Grad beträgt.

6. Gewächshaus-Lampe nach einem der vorhergehenden Ansprüche, **dadurch gekennzeichnet, dass** sie Drehmittel umfasst, um den Lampenrahmen zwischen einer ersten Einsatzposition und einer zweiten Einsatzposition zu drehen.

7. Gewächshaus-Lampe nach Anspruch 6, **dadurch gekennzeichnet, dass** die Drehmittel einen Kabelzug (7), von welchem ein erstes Ende in Verbindung mit dem Lampenrahmen (1) angeordnet ist, und eine Betätigungsvorrichtung, um den Kabelzug (7) zu bewegen, umfassen.

8. Gewächshaus-Lampe nach einem der vorhergehenden Ansprüche, **dadurch gekennzeichnet, dass** die Lichtquelle (2) eine Hochdruck-Natrium-Lampe, eine Mehrmetall-Lampe oder eine Quecksilberdampf-Lampe ist.

9. Gewächshaus-Lampe nach einem der vorhergehenden Ansprüche, **dadurch gekennzeichnet, dass** die Leistung der Lichtquelle (2) zwischen 100 und 700 W eingestellt werden kann.

10. Gewächshaus-Lampe nach einem der vorhergehenden Ansprüche, **dadurch gekennzeichnet, dass** sie Transportmittel umfasst, um das Stützteil (4) in einer im Wesentlichen vertikalen Richtung zu bewegen.

## Revendications

1. Lampe de serre, comprenant
- un cadre de lampe (1),
- une source lumineuse (2) montée en correspondance avec une première extrémité du cadre de lampe (1), et
- un réflecteur (3) disposé à une distance de la source lumineuse (2) pour réfléchir le rayonnement électromagnétique émis par la source lumineuse (2) ;
le cadre de lampe (1) étant adapté pour pouvoir tourner par rapport au réflecteur (3) de sorte que la distance entre la source lumineuse (2) et le réflecteur (3) peut être réglée,
**caractérisée en ce que** la lampe de serre comprend un élément de support (4) auquel le réflecteur (3) est fixé et **en ce que** une deuxième extrémité du cadre de lampe (1) est disposée en correspondance avec l'élément de support.

2. Lampe de serre selon la revendication 1, **caractérisée en ce que** la deuxième extrémité du cadre de lampe (1) est montée à pivotement sur l'élément de support (4).

3. Lampe de serre selon la revendication 1 ou 2, **caractérisée en ce que** l'élément de support (4) est un rail, une gouttière ou un fil de câble.

4. Lampe de serre selon l'une quelconque des revendications précédentes, **caractérisé en ce que** le cadre de lumière {1} peut être tourné dans la direction de l'axe optique du réflecteur (3).

5. Lampe de serre selon l'une quelconque des revendications précédentes, **caractérisée en ce que** l'angle de rotation du cadre de lampe (1) est d'au moins 60 degrés.

6. Lampe de serre selon l'une quelconque des revendications précédentes, **caractérisée en ce qu'**elle comprend des moyens de rotation pour faire tourner le cadre de lampe (1) entre une première position d'utilisation et une deuxième position d'utilisation.

7. Lampe de serre selon la revendication 6, **caractérisée en ce que** les moyens de rotation comprennent un fil de câble (7), dont une première extrémité est disposée en correspondance avec le cadre de lampe (L), et un actionneur destiné à déplacer ledit fil de câble (7).

8. Lampe de serre selon l'une quelconque des revendications précédentes, **caractérisée en ce que** la source lumineuse (2) est une lampe au sodium à haute pression, une lampe polymétallique ou une lampe à vapeur de mercure.

9. Lampe de serre selon l'une quelconque des revendications précédentes, **caractérisée en ce que** la puissance de la source lumineuse (2) peut être réglée entre 100 et 700 W.

10. Lampe de serre selon l'une quelconque des revendications précédentes, **caractérisée en ce qu'**elle comprend des moyens de transfert destinés à déplacer l'élément de support (4) dans une direction essentiellement verticale.
